# EUROPÄISCHE PATENTANMELDUNG

(11) **EP 1 464 875 A2**
(43) Veröffentlichungstag der Anmeldung: **06.10.2004**
(21) Anmeldenummer: 04006031.1
(22) Anmeldetag: 13.03.2004
(51) Int. Cl.: F16H 59/02

(54) **Monostabile Schaltvorrichtung mit P-Position**

(30) Priorität: 04.04.2003 DE 10315644
(71) Anmelder: ZF Lemförder Metallwaren AG, 49448 Lemförde (DE)
(72) Erfinder: Giefer, Andreas, 49448 Lemförde (DE); Meyer, Jörg, 49419 Wagenfeld (DE)

(57) **Zusammenfassung**

Die Erfindung betrifft eine Schaltvorrichtung zur, vorzugsweise kraftlosen, Übertragung von Schaltbefehlen an ein vollautomatisches oder semiautomatisches Getriebe eines Kraftfahrzeuges, mit:
- einem Rahmen und/oder Gehäuse (2),
- einem, entlang einer Schaltgasse schwenkbar gelagerten, Schalthebel (1), und
- einem ersten und einem zweiten Schaltanschlag für den Schalthebel ( 1 ), welche je eine Schaltposition (I, II) des Schalthebels (1) bestimmen,
- weiterhin mit mindestens einer Detektionsvorrichtung zum Abgreifen der Schaltpositionen (I, II), wobei
- zwischen diesen Schaltpositionen eine Ruheposition (0) angeordnet ist, in welche der Schalthebel ( 1 ) von einer ausgelenkten Schaltposition (I, II), durch eine Rückstellkraft getrieben, von selbst zurückschwenkt.

Die Erfindung zeichnet sich dadurch aus, dass die Schaltvorrichtung eine Betätigungsvorrichtung (13, 14) aufweist, welche einen Schaltanschlag außer Kraft setzen kann, so dass der Schalthebel über die, durch diesen Schaltanschlag definierte, Schaltposition (I, II) hinaus schwenkbar ist..

## Beschreibung

Die Erfindung betrifft eine Schaltvorrichtung zur, vorzugsweise kraftlosen, Übertragung von Schaltbefehlen an ein vollautomatisches oder semiautomatisches Getriebe eines Kraftfahrzeuges, mit einem Rahmen und/oder Gehäuse, einem, entlang einer Schaltgasse schwenkbar gelagerten, Schalthebel, und einem ersten und einem zweiten Schaltanschlag für den Schalthebel, welche je eine Schaltposition des Schalthebels bestimmen. Weiterhin weist die bekannte Schaltvorrichtung mindestens eine Detektionsvorrichtung zum Abgreifen der Schaltpositionen auf, wobei zwischen diesen Schaltpositionen eine Ruheposition angeordnet ist, in welche der Schalthebel von einer ausgelenkten Schaltposition, durch eine Rückstellkraft getrieben, von selbst zurückschwenkt.

Eine Schaltvorrichtung zur kraftlosen Übertragung von Schaltbefehlen mit einem Schwenkhebel, der sich entlang einer Schaltgasse verschwenken lässt, wobei durch Detektionseinrichtungen zum Abgreifen der Schaltposition Befehle an ein automatisches Schaltgetriebe eines Kraftfahrzeuges übertragen werden, ist aus der Patentanmeldung DE 100 05 167 A1 bekannt. Hier handelt es sich um eine Schaltvorrichtung, in der jeder einzelnen Schaltstufe eine Stellung des Schalthebels zugeordnet ist, wobei der Schalthebel in der jeweiligen Schaltposition verharrt und damit auch eine haptische Rückmeldung bezüglich der gewählten Fahrstufe an den Fahrer gibt.

Des weiteren ist aus der Patentanmeldung DE 197 56 034 A1 eine "Shift by Wire"-Schaltung bekannt, bei der der Schalthebel entlang einer Schaltgasse verschwenkbar ist und sich zwischen den Schaltpositionen, die durch Schaltanschläge definiert sind, eine Ruheposition für den Schalthebel befindet, in die der Schalthebel von einer ausgelenkten Schaltposition, durch eine Rückstellkraft getrieben, von selbst wieder zurückschwenkt.

Außerdem wird auf die Patentanmeldung DE 199 16 924 A1 hingewiesen, welche die grundsätzliche Funktion einer Automatikschaltvorrichtung beschreibt. Hier ist ein Wählhebel dargestellt, der entlang einer Schaltgasse zum Vorwählen von einzelnen Fahrstufen in zwei Auslenkungsrichtungen bewegbar ist und sich aus den beiden Auslenkungsrichtungen selbsttätig in immer die selbe Ausgangslage zurückstellt, wobei in mindestens einer Auslenkungsrichtung des Wählhebels zwei verschiedene Fahrstufen angewählt werden können, indem der Wählhebel zum Auswählen einer ersten Fahrstufe eine erste Strecke bis zu einem ersten "Anschlag" in die Auslenkungsrichtung bewegt wird und der Wählhebel zum Auswählen einer zweiten Fahrstufe eine zweite, größere Strecke, bis zu einem zweiten "Anschlag", in die selbe Auslenkungsrichtung bewegt wird, wobei der erste Anschlag überdrückt wird. Da zumindest der jeweils erste "Anschlag" überdrückt werden kann, handelt es sich dabei nicht um einen tatsächlichen Anschlag im originären Sinne dieses Wortes, sondern lediglich um eine spürbare Zwischenposition des Schalthebels. Die kinematische Lösung ist allerdings in dieser Schrift nicht offenbart.

Es gibt bei den "Shift by Wire"-Schaltungen also im wesentlichen zwei Ausführungsformen, nämlich Schaltungen mit festen, stabilen Schalthebelpositionen und Schaltungen mit einer einzigen Ruheposition und anderen instabilen Schaltpositionen, in die der Schalthebel kurzzeitig ausgelenkt werden kann. Beide Varianten haben Vor- und Nachteile. Bei Schaltungen mit festen Positionen ist im Normalbetrieb jederzeit die aktuelle Getriebeposition am Wählhebel zu ertasten und zu sehen, so dass der Fahrer jederzeit über die aktuelle Getriebesituation informiert ist. Bei den "Shift by Wire"-Systemen fehlt die mechanische Verbindung zum Getriebe und es ist möglich, dass die Wählhebelposition nicht mit der Getriebestellung übereinstimmt, da bestimmte Schalthebelpositionen beziehungsweise Schaltbefehle vom automatischen Getriebe nicht ausgeführt werden, da diese durch eine Logikverifikation ausgesetzt sein können, um ungewollte beziehungsweise zerstörende Schaltaktionen zu vermeiden.

Monostabile Schaltungen haben keine haptische Rückmeldung der aktuellen Getriebeposition, so dass auch keine falsche Information der aktuellen Schaltposition an den Fahrer übermittelt werden kann. Die Aktivierung einer Park-Sperre bei Automatikgetrieben geschieht bei monostabilen Schaltungen meist durch einen elektrischen Schalter, der beispielsweise am Knauf angeordnet ist. Eine direkte haptische Rückmeldung durch die Schaltvorrichtung an den Fahrer, dass eine bestimmte Getriebesituation vorliegt, beispielsweise dass die Parksperre eingelegt ist, ist nicht bekannt, so dass es zu Missverständnissen, beispielsweise bezüglich einer Zündschlüsselabzugssperre, kommen kann.

Es ist daher Aufgabe der Erfindung eine Schaltvorrichtung zur kraftlosen Übertragung von Schaltbefehlen zu finden, welche es ermöglicht, die Vorteile einer in mehreren Positionen stabilen und einer monostabilen Schaltung zu verbinden, so dass einerseits keine Getriebestellung angezeigt wird, die nicht dem aktuellen Zustand entspricht und andererseits dem Fahrer aber eine eindeutige Rückmeldung über den jeweiligen Zustand der Parksperre und damit zulässiger Aktionen, zum Beispiel dem Schlüsselabzug, vermittelt.

Diese Aufgabe der Erfindung wird durch die Merkmale des ersten Patentanspruches gelöst. Besondere Ausbildungen der Erfindung sind in den Unteransprüchen angegeben.

Demgemäss schlägt der Erfinder vor, die an sich bekannte Schaltvorrichtung zur, vorzugsweise kraftlosen, Übertragung von Schaltbefehlen an ein vollautomatisches oder semiautomatisches Getriebe eines Kraftfahrzeuges, welche einen Rahmen und/oder ein Gehäuse, einen entlang einer Schaltgasse schwenkbar gelagerten Schalthebel mit einem ersten und einem zweiten Schaltanschlag für den Schalthebel aufweist, wobei je ein Schaltanschlag eine Schaltposition des Schalthebels bestimmt und weiterhin mindestens eine Detektionsvorrichtung zum Abgreifen der Schaltpositionen vorgesehen ist, während zwischen diesen Schaltpositionen eine Ruheposition angeordnet ist, in welche der Schalthebel von einer ausgelenkten Schaltposition, durch eine Rückstellkraft getrieben, von selbst zurückschwenkt, weiterzuentwickeln. Die Weiterentwicklung besteht darin, dass die Schaltvorrichtung eine Betätigungsvorrichtung aufweist, welche einen Schaltanschlag außer Kraft setzen kann, so dass der Schalthebel über die, durch diesen Schaltanschlag definierte, Schaltposition hinaus schwenkbar ist.

Es ist hier darauf hinzuweisen, dass im Sinne dieser Anmeldung unter einem Schaltanschlag ein tatsächlicher Anschlag gegen einen mit normaler Kraft nicht überwindbaren mechanischen Widerstand zu verstehen ist. Ein solcher Schaltanschlag ist nicht mit dem in der zuvor genannten Patentanmeldung DE 199 16 924 A1 erwähnten "Anschlag" zu verwechseln, der durch normale Kraftanwendung überdrückbar ist. Bei einem solchen "Anschlag" handelt es sich lediglich um eine, durch einen Druckpunkt festgelegte Zwischenposition eines Schalthebels auf dem Weg zu einem tatsächlichen endständigen Schaltanschlag. Im übrigen ist die mechanische und kinematische Ausführung dieser Schaltvorrichtung in dieser zitierten Patentanmeldung lediglich aufgabenhaft dargestellt und eine Lösung wurde dem Fachmann nicht offenbart.

In der erfindungsgemäßen Ausführung der Schaltvorrichtung wird also eine monostabile Schaltung mit zwei mechanisch begrenzten Schaltpositionen dargestellt, wobei zumindest eine der mechanischen Begrenzungen der Schaltpositionen durch eine Betätigungsvorrichtung aufgehoben werden kann und dem Fahrer damit eine eindeutige Rückkopplung zuteil wird, wenn die Möglichkeit eröffnet wird, den Schalthebel nun in eine dritte Schaltposition einzuschwenken. Entsprechend der Aufgabe werden also hierdurch die Vorteile der monostabilen Schaltung mit der verbesserten Rückkopplung einer multistabilen Schaltung, aufgrund ihrer besseren Rückkopplung, vereinigt.

In einer besonderen Ausführung der Schaltvorrichtung schlägt der Erfinder nun vor, dass mindestens ein Schaltanschlag durch eine sich mit dem Schalthebel bewegende schalthebelseitige Anschlagfläche und eine gegenüber einer Bewegung des Schalthebels ortsfeste Anschlagfläche gebildet wird, wobei vorteilhaft die schalthebelseitige Anschlagfläche durch ein mit dem Schalthebel verbundenes Anschlagelement, vorzugsweise einen Zapfen am Schalthebel, erzeugt wird. Die ortsfeste Anschlagfläche kann durch ein, mit dem Rahmen und oder Gehäuse in Verbindung stehendes Anschlagelement erzeugt werden, wobei das Anschlagelement mittels einer Betätigungsvorrichtung so ausgelenkt werden kann, dass im ausgelenkten Zustand der ursprüngliche Anschlag wirkungslos wird.

Besonders vorteilhaft ist es, wenn das Anschlagelement ein Kipphebel ist, der um eine Kipphebel-Schwenkachse schwenkbar gelagert ist, wobei in einer bevorzugten Ausführung die Kipphebel-Schwenkachse selbst auf einem schwenkbaren Nothebel in einer Nothebelachse gelagert wird, der mit einer Notentriegelung des Automatikgetriebes verbunden ist und diese durch seine Auslenkung betätigen kann. Durch diese Ausführung wird es ermöglicht, die oben beschriebene Schaltvorrichtung mit einer vorzugsweise mechanischen Notentriegelung des Automatikgetriebes zu verbinden, wie sie grundsätzlich in der oben zitierten Patentenanmeldung DE 100 05 167 A1 beschrieben wurde.

Zusätzlich kann ein Verriegelungselement vorgesehen sein, welches die Betätigung der Notentriegelung durch eine Blockierung des Verschwenkens des Nothebels verhindern kann. Ein solches Verriegelungselement kann beispielsweise ein an einer Achse gelagertes Kippelement sein, welches in einer Blockadeposition ein Verschwenken des Kipphebels um die Nothebelachse verhindert, während es in einer anderen Freigabeposition dieses Verschwenken erlaubt.

In einer speziellen Ausführung kann der Schalthebel der erfindungsgemäßen Schaltvorrichtung ein Koppelelement aufweisen, welches mit dem Anschlagelement zu verhaken ist, so dass eine feste Kopplung zwischen Schalthebel und Anschlagelement bewirkt wird. In einer bevorzugten Ausführungsform der Schaltvorrichtung weist der Schalthebel eine Taste auf, die unmittelbar mit der Bestätigungsvorrichtung verbunden ist, um diese durch Tastendruck mechanisch auszulösen. Eine solche Betätigungsvorrichtung kann beispielsweise eine längsverschiebbare Druckstange aufweisen, die einen Zapfen längs zum Schalthebel bewegen kann.

Des weiteren schlägt der Erfinder in einer anderen Ausführung der Schaltvorrichtung vor, dass die Betätigungsvorrichtung nur mittelbar mit einer Taste am Schalthebel verbunden ist, so dass diese durch Tastendruck elektrisch oder durch Erzeugung eines sonstigen Signals eine Aufhebung des mechanischen Anschlags auslösen kann.

Die Betätigungsvorrichtung kann einen, vorzugsweise elektromagnetisch betriebenen, Stößel aufweisen, der ein Ausschwenken einer Anschlagfläche bewirkt oder zumindest das Aufheben einer zuvor vorhandenen Sperre nun ermöglicht. Beispielsweise kann ein solcher Stößel so ausgebildet und angeordnet sein, dass er den vorzugsweise durch eine Feder gegenbelasteten Kipphebel ausschwenken kann, so dass der Schaltanschlag, der durch diesen Kipphebel gebildet wurde, nun wirkungslos wird.

Erfindungsgemäß kann die Schaltvorrichtung für das Verriegelungselement auch eine, vorzugsweise elektrisch gesteuerte, Entriegelungsvorrichtung aufweisen, welches es nun ermöglicht, die Freigabe, zum Beispiel eines Kipphebels, beliebig zu ermöglichen oder zu verhindern und damit gegebenenfalls unerwünschte Schaltsituationen, zum Beispiel die Betätigung einer Notentriegelung in Abhängigkeit von einer bestimmten Zündschlüsselstellung, auszuschalten.

Erfindungsgemäß wird die Schalthebelbewegung, dessen Weg durch das Ausschalten eines Schaltanschlages vergrößert werden kann, durch einen weiteren dahinterliegenden Schaltanschlag nochmals begrenzt, so dass dieser eine maximal ausgelegte Schaltposition des Schalthebels definiert.

Die Detektionsvorrichtung kann für mindestens eine der Schaltpositionen des Schalthebels einen Hall-Sensor, einen optischen Sensor oder auch einen elektrischen Schalter aufweisen. Derartige Ausführungsformen sind im Stand der Technik allgemein bekannt und können hier beliebig eingesetzt wird.

Des weiteren kann die Rückstellkraft des Schalthebels durch eine federbelastete Rolle oder ein federbelastetes Gleitelement, die/das mit dem Schalthebel gekoppelt ist und über eine gehäusefeste Kurvatur verläuft, erzeugt werden. Eine ähnliche Ausführung ist beispielsweise aus der oben zitierten DE 197 56 034 A1 bekannt. Hierzu ist anzumerken, dass auch eine kinematische Umkehr einer solchen Ausführung möglich ist, indem beispielsweise am Schalthebel selbst eine Kurvatur angebracht ist, die über eine am Gehäuse angebrachte federbelastete Rolle oder ein federbelastetes Gleitelement sich bewegt, wobei auch eine feststehende Rolle oder ein feststehendes Gleitelement denkbar ist, welches sich über eine federbelastete Kurvatur bewegt.

Des weiteren kann die erfindungsgemäße Schaltvorrichtung eine elektronische oder programmgesteuerte Schaltung aufweisen, welche die Betätigungsvorrichtung zur Außerkraftsetzung eines Schaltanschlages, vorzugsweise unter Berücksichtigung eines aktuellen Fahr- und/oder Schaltzustandes, steuert.

Ebenso kann eine elektronische oder programmgesteuerte Schaltung für die Auslösung des Verriegelungselements, vorzugsweise unter Berücksichtigung eines aktuellen Fahrund/oder Schaltzustandes, vorgesehen werden, wobei darauf hinzuweisen ist, dass die beiden zuvor genannten Schaltungen auch in einer einzigen Schaltung integriert sein können.

Ergänzend sei auch noch erwähnt, dass die hier beschriebene Anschlagflächen in ihrer Dimension auch relativ klein, also fast punktförmig, linienförmig oder gekrümmt ausgestaltet sein können, ohne den Rahmen der Erfindung zu verlassen. Außerdem ist zu erwähnen, dass es sich bei den beschriebenen Detektionsvorrichtungen im Falle einer kraftlosen Übertragung um Schalter, Hall-Sensoren oder ähnliches zur Erzeugung eines Schaltbefehls handelt, während im Falle einer mit Kraftschluss arbeitenden Schaltvorrichtung zur Übertragung von Schaltbefehlen, die Detektionsvorrichtung auch als mechanisches oder hydraulisches Koppelelement zum Automatikgetriebe ausgebildet sein kann.

Weitere Merkmale und Vorteile der Erfindung ergeben sich aus den Unteransprüchen und der nachfolgenden Beschreibung eines bevorzugten Ausführungsbeispieles unter Bezugnahme auf die Zeichnungen. Es zeigen:
- Figur 1:: Längsschnitt durch Schaltvorrichtung mit Schalthebel in Neutralposition;
- Figur 2:: Schaltvorrichtung mit Schalthebel in vorderer Schaltposition;
- Figur 3:: Schaltvorrichtung mit Schalthebel in rückwärtiger erster Schaltposition am ausrückbaren Schaltanschlag;
- Figur 4:: Schaltvorrichtung mit ausgerücktem Kipphebel und Schaltanschlag in extremer rückseitiger Schaltposition;
- Figur 5:: Schaltvorrichtung mit Schalthebel gemäß Figur 4 mit eingehaktem Kipphebel;
- Figur 6:: Schaltvorrichtung mit Schalthebel und Kipphebel in Position gemäß Figur 5 mit entriegeltem Verriegelungshebel;
- Figur 7:: Schaltvorrichtung mit Schalthebel in vorderster Schaltposition und aktivierter Parksperren-Entriegelung.

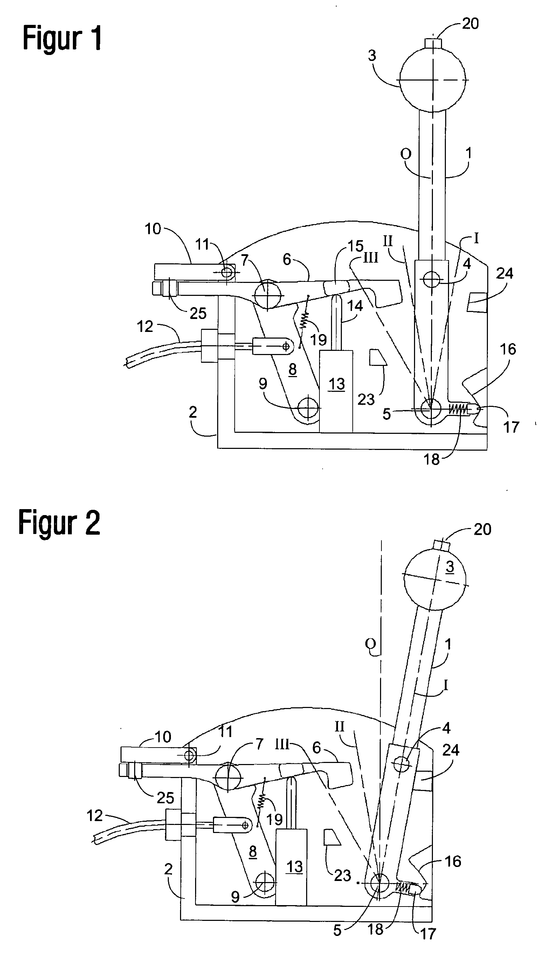

Die Figur 1 zeigt eine schematische Darstellung einer bevorzugten erfindungsgemäßen Schaltvorrichtung im Längsschnitt. Aus Übersichtlichkeitsgründen sind selbstverständliche Einzelteile der Schaltvorrichtung weggelassen und es wurde sich auf die wesentlichen funktionalen Konstruktionsteile dieser besonderen Ausführung beschränkt. So wurden beispielsweise die allgemein bekannten Detektionsvorrichtungen zur Detektion einer jeweiligen Schaltposition nicht gezeigt.

Die Figur 1 zeigt die erfindungsgemäße Schaltvorrichtung mit einem Schalthebel 1, der um eine Schaltachse 5 schwenkbar gelagert ist. Am Schalthebel 1 befindet sich seitlich angeordnet ein Zapfen 4, der als schalthebelseitige Anschlagfläche fungiert. Der Schalthebel 1 verfügt über einen Schaltknauf 3 und am unteren Ende über eine rechtwinklige Verlängerung, welche ein Gleitelement 17 aufnimmt, das durch eine Feder 18 elastisch an eine gehäuseseitig angeordnete Kurvatur 16 angepresst wird. Die Kurvatur 16 ist derart ausgeführt, dass der Schalthebel 1 sich in der gezeigten Position von selbst stabilisiert, während eine Auslenkung in eine vordere oder hintere Position nur durch einen ergonomisch angenehmen Widerstand erfolgt, indem das Gleitelement 17 die Feder 18 beim Gleiten über die Kurvatur 16 zusammenpresst. Entsprechend ergibt sich hieraus auch eine Rückstellkraft für den Schalthebel 1 aus ausgelenkten Positionen, die jeweils in unbelasteter Situation in die hier gezeigte Neutralstellung zurückführt. In dem nur sehr schematisch dargestellten Gehäuse 2 befindet sich eine Anschlagkontur 24, gegen die der Schalthebel 1, sobald er in eine vordere Richtung - die hier der rechten Seite entspricht - ausgelenkt wird, anschlägt, so dass hierdurch eine erste Schaltposition definiert ist. Diese Schaltposition wird durch entsprechende Detektionsmittel abgegriffen und kann an ein automatisches oder halbautomatisches Getriebe weitergegeben werden.

Dargestellt ist diese Situation in der Figur 2, die den Schalthebel 1 in der vorderen Schaltposition zeigt, wobei der Schalthebel 1 gegen die gehäusefeste Anschlagkontur 24 angeschlagen ist.

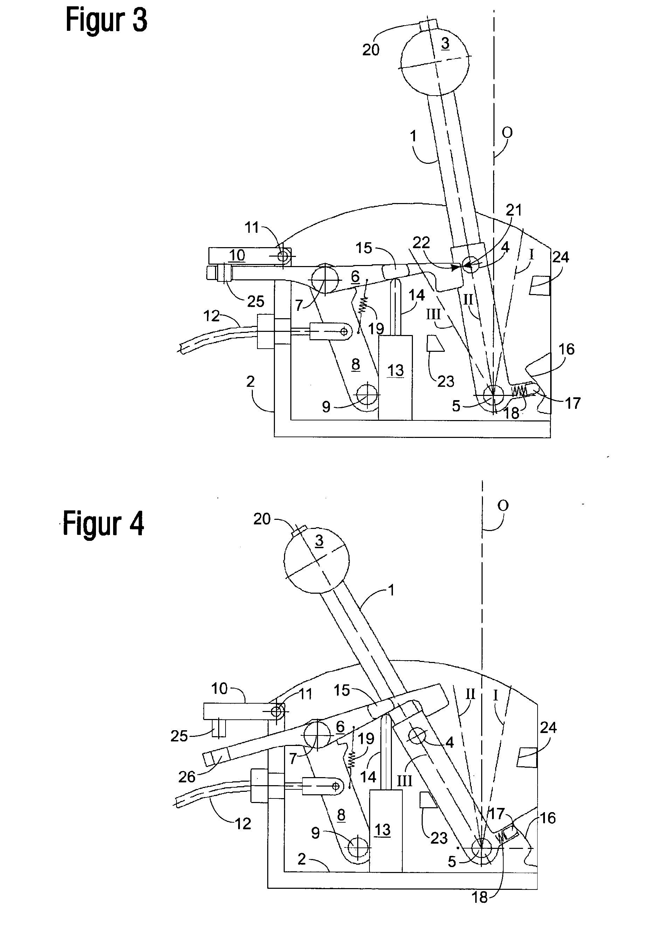

Wird der Schalthebel - wie in der Figur 3 dargestellt - nach hinten bewegt, so schlägt der seitlich am Schalthebel 1 angebrachte Zapfen 4 mit seiner Anschlagfläche 21 gegen die Anschlagfläche 22 des Kipphebels 6 und bildet somit eine zweite Schaltposition des Schalthebels 1. Auch hier wird durch eine Detektionsvorrichtung diese Schaltposition detektiert und kann gegebenenfalls an das Automatikgetriebe weitergeleitet werden, so dass ein entsprechender Schaltvorgang im Automatikgetriebe eingeleitet wird.

Der Kipphebel 6, an dessen vorderen Ende sich die Anschlagfläche 22 befindet, ist über eine Kipphebelschwenkachse 7 schwenkbar gelagert. Die Kipphebelschwenkachse 7 befindet sich ihrerseits wieder am Ende eines ebenfalls schwenkbar gelagerten Nothebels 8, wobei die Nothebelachse 9, um die der Nothebel 8 schwenkbar ist, sich am gegenüberliegenden Ende der Kipphebelschwenkachse 7 befindet. In dieser Ausführung ist die Nothebelachse 9 ortsfest mit dem Gehäuse 2 beziehungsweise mit dem damit verbundenen Rahmen, der hier nicht detailliert dargestellt ist, verbunden.

Zwischen der Kipphebelschwenkachse 7 und der Nothebelachse 9 greift ein Bowdenzug 12 an, welcher für die mechanische Parksperren-Entriegelung des Automatikgetriebes zuständig ist.

Es ist darauf hinzuweisen, dass die hier gezeigte zweite Schaltposition in dem Zustand der Schaltvorrichtung der Figuren 1 bis 3 keinesfalls durch normale Kraftaufwendung am Schalthebel 1 überdrückt werden kann, sondern dass dem Fahrer in diesem Zustand lediglich die beiden in den Figuren 1 bis 3 gezeigten Endpositionen des Schalthebels zur Verfügung stehen, wobei der Schalthebel von diesen Endpositionen aus immer von selbst in die mittlere Neutralposition zurückschwenkt. Es handelt sich also hierbei um das Schaltprinzip einer "Tipp-tronic", in der durch kurzseitiges Ausschwenken des Schalthebels in eine vordere oder hintere Lage relativ zur Neutralposition ein bestimmter Befehl an das Automatikgetriebe weitergeleitet wird. Dies kann einerseits der Befehl zum Hoch- oder Herunterschalten des Getriebes bedeuten oder es wird die vordere Position für eine Getriebesituation zum normalen Vorwärtsfahren verwendet und die hintere Schaltposition zum Einlegen des Rückwärtsganges verwendet, wobei in diesem Fall eine zusätzliche Logikverifikation notwendig ist, so dass durch ein versehentliches Bewegen des Schalthebels 1 in eine R-Position keine Getriebeschäden auftreten können, falls das Fahrzeug sich in einer zu schnellen Vorwärtsbewegung befindet.

Möchte der Fahrer nun das Automatikgetriebe in einen Parkstatus, beziehungsweise P-Position, schalten, so kann er einen am Knauf befindlichen Druckknopf 20 tätigen, durch den die erfindungsgemäße Betätigungsvorrichtung den hinteren Schaltanschlag wirkungslos werden lässt.

In dem hier gezeigten Ausführungsbeispiel handelt es sich um einen Stößel 14, der durch einen elektromagnetischen Antrieb 13 den Kipphebel 6 um die Kipphebelschwenkachse 7 hochklappt, indem er an einem seitlich am Kipphebel angebrachten Zapfen 15 angreift. Es ist dabei darauf hinzuweisen, dass neben der elektrischen oder elektronischen Verbindung zwischen dem Druckknopf 20 am Schalthebel 1 und der Betätigungsvorrichtung auch eine mechanische Kopplung vorgesehen werden kann. Beispielsweise kann durch die Betätigung des Druckknopfes 20 ein Bowdenzug betätigt werden, der ein Ausrücken des Kipphebels 6 bewirkt.

Befindet sich der Schalthebel 1 in der in der Figur 4 gezeigten hinteren Schaltposition, so kann wiederum durch eine Detektionsvorrichtung der entsprechende Schaltbefehl an das Automatikgetriebe weitergegeben werden. Ergänzend ist darauf hinzuweisen, dass der Schalthebel 1 in seiner hinteren Position gegen eine zweite Anschlagkontur 23, die hier gehäuse- beziehungsweise rahmenfest ausgeführt ist, anschlägt und somit die dritte Schaltposition eindeutig definiert wird.

Wird nun der Druckknopf 20 vom Fahrer gelöst, so erzeugt das Herabsenken des Stößels 14 gleichzeitig ein Herunterschwenken des Kipphebels 6, der an seiner vorderen Seite eine hakenähnliche Kontur aufweist, die den Zapfen 4 des Schalthebels 1 umschließt, so dass eine Verriegelung des Schalthebels 1 in dieser Position erzeugt wird.

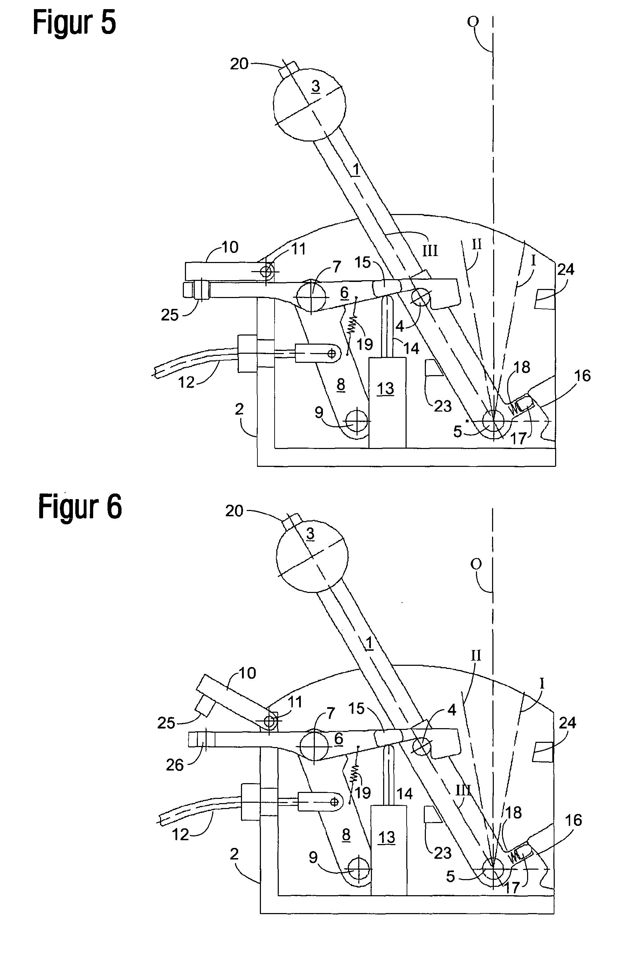

Die Figur 5 zeigt eine solche Situation, wobei zusätzlich noch darauf hinzuweisen ist, dass am hinteren Ende des Kipphebels 6 ein Verriegelungshebel 10 mit einem Zapfen 25 in einer Aussparung 26 am Kipphebel eingreift. Durch diese Kopplung zwischen dem Kipphebel 6 und dem Verriegelungshebel 10, dessen Schwenkachse gehäusefest gelagert ist, wird gleichzeitig ein Verschwenken des Nothebels 8 verhindert, so dass die Notentriegelung des Getriebes durch den Bowdenzug 12, der am Nothebel 8 angreift, nicht möglich ist.

Erst durch eine zusätzliche Tätigkeit des Fahrers, vorzugsweise das Abziehen des Zündschlüssels, wird eine hier nicht explizit gezeigte Betätigungsvorrichtung für den Verriegelungshebel 10 betätigt, so dass dieser um die Verriegelungshebel-Schwenkachse 11 nach oben geschwenkt wird und wie es in Figur 6 gezeigt ist, den Kipphebel 6 in Verbindung mit dem Nothebel 8 für eine Vorwärtsbewegung freigibt.

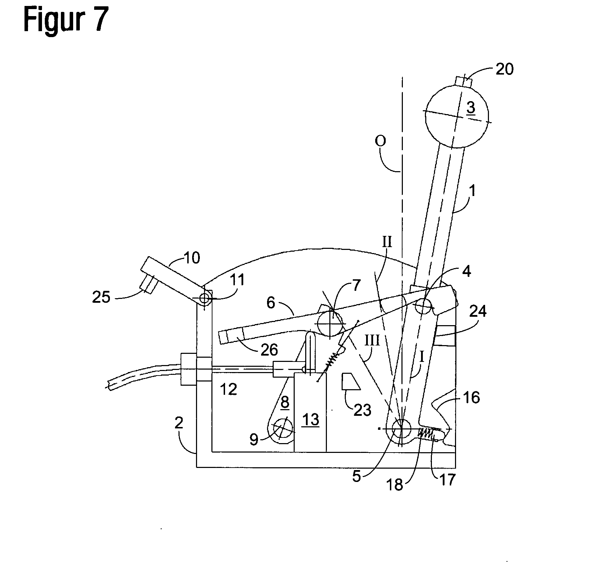

Eine solche Vorwärtsbewegung nach einer Entriegelung des Kipphebels 6 aufgrund eines Anhebens des Verriegelungshebels 10 ist in der Figur 7 dargestellt. Hier hat sich der Kipphebel 6 an seiner Vorderseite in den Zapfen 4 am Schalthebel eingehakt, so dass dessen Verschwenken in die vorderste Schaltposition gleichzeitig ein Herausziehen der Seele des Bowdenzuges 12 bewirkt, wodurch die mechanische Parksperren-Entriegelung des Automatikgetriebes des Fahrzeuges ausgelöst wird.

Die hier dargestellte Ausführungsform der erfindungsgemäßen Schaltvorrichtung zeigt also, dass es möglich ist, eine monostabile Schaltvorrichtung so auszugestalten, dass neben einer ersten und zweiten Schaltposition, die durch einfaches Antippen des Schalthebels erreicht werden kann, zusätzlich eine dritte Schaltposition möglich ist, die jedoch nur aufgrund vorgegebener Getriebe- oder Fahrzeugbedingungen dem Fahrer eröffnet wird, wobei der Fahrer durch eine haptische Rückmeldung eindeutig erkennen kann, ob diese dritte Schaltposition aufgrund des Status des Fahrzeuges und dessen Getriebes eingelegt werden kann, wobei zusätzlich der Schalthebel in dieser dritten Schaltposition verharrt, wenn diese einmal eingelegt ist.

Erreicht wird dieses dadurch, dass eine monostabile Schaltvorrichtung, die zunächst durch zwei Anschläge in ihrer Bewegung auf zwei Schaltpositionen begrenzt ist, durch ein Ausrücken mindestens eines der begrenzenden Anschläge in eine dritte oder gegebenenfalls - falls der zweite Anschlag ebenfalls ausgerückt wird - in eine vierte Position bewegt werden kann, wobei dieses in Abhängigkeit der jeweiligen Getriebesituation stattfindet.

Es versteht sich, dass die vorstehend genannten Merkmale der Erfindung nicht nur in der jeweils angegebenen Kombination, sondern auch in anderen Kombinationen oder in Alleinstellung verwendbar sind, ohne den Rahmen der Erfindung zu verlassen. Ebenso liegt es im Rahmen der Erfindung eine mechanische Umkehr der Funktionen der einzelnen mechanischen Elemente der Erfindung zu bewirken.

### BEZUGSZEICHENLISTE:

- 1: Schalthebel
- 2: Gehäuse mit Rahmen
- 3: Schaltknauf
- 4: Zapfen
- 5: Schaltachse
- 6: Kipphebel
- 7: Kipphebelschwenkachse
- 8: Nothebel
- 9: Nothebelachse
- 10: Verriegelungshebel
- 11: Verriegelungshebel-Schwenkachse
- 12: Bowdenzug für Parksperren-Notentriegelung
- 13: Elektromagnetischer Antrieb für Stößel
- 14: Stößel
- 15: Zapfen am Kipphebel
- 16: Kurvatur
- 17: Gleitelement
- 18: Feder
- 19: Feder
- 20: Druckknopf
- 21: Anschlagfläche
- 22: Anschlagfläche
- 23: gehäuseseitige Anschlagkontur
- 24: gehäuseseitige Anschlagkontur
- 25: Zapfen
- 26: Aussparung
- I, II, III: Schaltpositionen
- O: Ruheposition

## Patentansprüche

1. Schaltvorrichtung zur, vorzugsweise kraftlosen, Übertragung von Schaltbefehlen an ein vollautomatisches oder semiautomatisches Getriebe eines Kraftfahrzeuges, mit:
- einem Rahmen und/oder Gehäuse (2),
- einem, entlang einer Schaltgasse schwenkbar gelagerten, Schalthebel (1), und
- einem ersten und einem zweiten Schaltanschlag für den Schalthebel (1), welche je eine Schaltposition (I, II) des Schalthebels (1) bestimmen,
- weiterhin mit mindestens einer Detektionsvorrichtung zum Abgreifen der Schaltpositionen (I, II), wobei
- zwischen diesen Schaltpositionen eine Ruheposition (0) angeordnet ist, in welche der Schalthebel (1) von einer ausgelenkten Schaltposition (I, II), durch eine Rückstellkraft getrieben, von selbst zurückschwenkt,
**dadurch gekennzeichnet, dass**
- die Schaltvorrichtung eine Betätigungsvorrichtung (13, 14) aufweist, welche einen Schaltanschlag außer Kraft setzen kann, so dass der Schalthebel über die, durch diesen Schaltanschlag definierte, Schaltposition (I, II) hinaus schwenkbar ist.

2. Schaltvorrichtung gemäß dem voranstehenden Anspruch 1, **dadurch gekennzeichnet, dass** mindestens ein Schaltanschlag durch eine sich mit dem Schalthebel (1) bewegende schalthebelseitige Anschlagfläche (21) und eine gegenüber einer Bewegung des Schalthebels ortsfeste Anschlagfläche (22) gebildet wird.

3. Schaltvorrichtung gemäß dem voranstehenden Anspruch 2, **dadurch gekennzeichnet, dass** die schalthebelseitige Anschlagfläche (21) durch ein mit dem Schalthebel (1) verbundenes Anschlagelement, vorzugsweise einen Zapfen (4) am Schalthebel (1), gebildet wird.

4. Schaltvorrichtung gemäß einem der voranstehenden Ansprüche 2 bis 3, **dadurch gekennzeichnet, dass** die ortsfeste Anschlagfläche (22) durch ein, mit dem Rahmen und/oder Gehäuse (2) in Verbindung stehendes, Anschlagelement (6) gebildet ist.

5. Schaltvorrichtung gemäß einem der voranstehenden Ansprüche 3 bis 4, **dadurch gekennzeichnet, dass** das Anschlagelement (6) mittels der Betätigungsvorrichtung (13, 14) so ausgelenkt werden kann, dass im ausgelenkten Zustand der ursprüngliche Anschlag wirkungslos wird.

6. Schaltvorrichtung gemäß dem voranstehenden Anspruch 5, **dadurch gekennzeichnet, dass** das Anschlagelement ein Kipphebel (6) ist, der um eine Kipphebelschwenkachse (7) schwenkbar gelagert ist.

7. Schaltvorrichtung gemäß dem voranstehenden Anspruch 6, **dadurch gekennzeichnet, dass** die Kipphebel-Schwenkachse (7) selbst auf einem schwenkbaren Nothebel (8) in einer Nothebelachse (9) gelagert ist, der mit einer Notentriegelung (12) des Automatikgetriebes verbunden ist und diese durch seine Auslenkung betätigen kann.

8. Schaltvorrichtung gemäß dem voranstehenden Anspruch 7, **dadurch gekennzeichnet, dass** ein Verriegelungselement (10) vorgesehen ist, welches das Verschwenken des Nothebels (8) verhindern kann.

9. Schaltvorrichtung gemäß dem voranstehenden Anspruch 8, **dadurch gekennzeichnet, dass** das Verriegelungselement (10) ein an einer Achse (11) gelagertes Kippelement (10) ist, welches in einer Blockadeposition ein Verschwenken des Kipphebels (6) um die Nothebelachse (9) verhindern kann und in einer anderen Freigabeposition dieses Verschwenken erlaubt.

10. Schaltvorrichtung gemäß einem der voranstehenden Ansprüche 3 bis 9, **dadurch gekennzeichnet, dass** der Schalthebel ein Koppelelement (4) aufweist, welches mit dem Anschlagelement verhakt werden kann.

11. Schaltvorrichtung gemäß einem der voranstehenden Ansprüche 1 bis 10, **dadurch gekennzeichnet, dass** die Betätigungsvorrichtung (13, 14) unmittelbar mit einer Taste (20) am Schalthebel (1) verbunden ist, um diese durch Tastendruck mechanisch ausgelöst werden kann.

12. Schaltvorrichtung gemäß dem voranstehenden Anspruch 11, **dadurch gekennzeichnet, dass** die Betätigungsvorrichtung (13, 14) eine längsverschiebbare Druckstange aufweist, die einen Zapfen (4) längs zum Schalthebel (1) bewegen kann.

13. Schaltvorrichtung gemäß einem der voranstehenden Ansprüche 1 bis 10, **dadurch gekennzeichnet, dass** die Betätigungsvorrichtung (13, 14) mittelbar mit einer Taste (20) am Schalthebel (1) verbunden ist, um diese durch Tastendruck elektrisch oder durch Erzeugung eines sonstigen Signals auslösen kann.

14. Schaltvorrichtung gemäß einem der voranstehenden Ansprüche 1 bis 13, **dadurch gekennzeichnet, dass** die Betätigungsvorrichtung (13, 14) einen, vorzugsweise elektromagnetisch betriebenen, Stößel (14) aufweist, der ein Ausschwenken einer Anschlagfläche (21, 22) bewirkt oder ermöglicht.

15. Schaltvorrichtung gemäß einem der voranstehenden Ansprüche 6 bis 13, **dadurch gekennzeichnet, dass** die Betätigungsvorrichtung einen, vorzugsweise elektromagnetisch betriebenen, Stößel (14) aufweist, der den, vorzugsweise durch eine Feder (19) belasteten, Kipphebel (6) ausschwenken kann.

16. Schaltvorrichtung gemäß einem der voranstehenden Ansprüche 8 bis 15, **dadurch gekennzeichnet, dass** das Verriegelungselement (10) eine, vorzugsweise elektrisch gesteuerte, Entriegelungsvorrichtung aufweist.

17. Schaltvorrichtung gemäß einem der voranstehenden Ansprüche 1 bis 16, **dadurch gekennzeichnet, dass** zumindest in einer Auslenkrichtung des Schalthebels ein weiterer Schaltanschlag (23) vorgesehen ist, der eine maximal ausgelenkte Schaltposition (III) des Schalthebels (1) definiert.

18. Schaltvorrichtung gemäß einem der voranstehenden Ansprüche 1 bis 17, **dadurch gekennzeichnet, dass** die Detektionsvorrichtung für mindestens eine der Schaltpositionen (I, II, III) des Schalthebels (1) einen Hall-Sensor aufweist.

19. Schaltvorrichtung gemäß einem der voranstehenden Ansprüche 1 bis 18, **dadurch gekennzeichnet, dass** die Detektionsvorrichtung für mindestens eine der Schaltpositionen (I, II, III) des Schalthebels (1) einen optischen Sensor aufweist.

20. Schaltvorrichtung gemäß einem der voranstehenden Ansprüche 1 bis 19, **dadurch gekennzeichnet, dass** die Detektionsvorrichtung für mindestens eine der Schaltpositionen (I, II, III) des Schalthebels (1) einen elektrischen Schalter aufweist.

21. Schaltvorrichtung gemäß einem der voranstehenden Ansprüche 1 bis 20, **dadurch gekennzeichnet, dass** die Rückstellkraft des Schalthebels (1) durch eine federbelastete Rolle oder ein federbelastetes Gleitelement (17, 18), die/das mit dem Schalthebel (1) gekoppelt ist und über eine gehäusefeste Kurvatur (16) läuft, erzeugt wird.

22. Schaltvorrichtung gemäß einem der voranstehenden Ansprüche 1 bis 21, **dadurch gekennzeichnet, dass** eine elektronische oder programmgesteuerte Schaltung vorgesehen ist, welche die Betätigungsvorrichtung (13, 14) zur Außerkraftsetzung eines Schaltanschlages, vorzugsweise unter Berücksichtigung eines aktuellen Fahr- und/oder Schaltzustandes, steuert.

23. Schaltvorrichtung gemäß einem der voranstehenden Ansprüche 8 bis 22, **dadurch gekennzeichnet, dass** eine elektronische oder programmgesteuerte Schaltung für die Auslösung des Verriegelungselements (10), vorzugsweise unter Berücksichtigung eines aktuellen Fahr- und/oder Schaltzustandes, vorgesehen ist.
